# EUROPEAN PATENT SPECIFICATION

(11) **EP 1 627 786 B1**
(45) Date of publication and mention of the grant of the patent: **19.09.2007**
(21) Application number: 04104008.0
(22) Date of filing: 20.08.2004
(51) Int. Cl.: B60S 1/38

(54) **Windscreen wiper device**
Scheibenwischervorrichtung
Dispositif d'essuie-glace

(43) Date of publication of application: 22.02.2006
(73) Proprietor: Federal-Mogul S.A., 6790 Aubange (BE)
(72) Inventor: Boland, Xavier, 6700, Arlon (BE); Orjela, Gurdev, 6790, Aubange (BE)
(74) Representative: Hooiveld, Arjen Jan Winfried

(56) References cited:
- WO-A-20/04018271
- DE-A- 10 015 294
- US-A- 5 514 076
- US-A1- 2002 152 668
- US-A1- 2004 025 280
- PATENT ABSTRACTS OF JAPAN vol. 018, no. 201 (C-1188), 8 April 1994 (1994-04-08) -& JP 06 002059 A (FURUKAWA ELECTRIC CO LTD:THE), 11 January 1994 (1994-01-11)

## Description

The present invention relates to a windscreen wiper device comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, which windscreen wiper device further comprises a connecting device for an oscillating arm, wherein said oscillating arm is pivotally connected to said connecting device about a pivot axis near one end. The invention also refers to a method for manufacturing such a windshield wiper device.

Such a windscreen wiper device is known from German patent publication no. 101 30 903 (Robert Bosch GmbH), for example. The prior art windscreen wiper device is designed as a "yokeless" wiper device, wherein no use is made of several yokes pivotally connected to each other, but wherein the wiper blade is biassed by the longitudinal strips, as a result of which it exhibits a specific curvature.

A disadvantage of the windscreen wiper device known from the above-mentioned German patent document is the following. The oscillating arm of this prior art windscreen wiper device is pivotally connected to a mounting head fixed for rotation to a shaft driven by a small motor. In use, the shaft rotates alternately in a clockwise and in a counter-clockwise sense carrying the mounting head into rotation also, which in turn draws the oscillating arm into rotation and by means of the connecting device moves the wiper blade. A spring is hooked with its first end on the mounting head and with its second end on the oscillating arm in order to ensure that the oscillating arm and thus the wiper blade connected thereto is pressed onto the windscreen to be wiped. However, in practice it appears that the oscillating does not press the wiper blade with enough force and/or a constant force (measured along the length of the wiper blade), that is an even pressure onto the windscreen to be wiped, with all negative consequences involved as far as the wiping qualities are concerned.

It is the objective of the present invention to obviate these disadvantages of the prior art, particularly to obtain a windscreen wiper device which has excellent wiping properties.

In order to accomplish that objective a windscreen wiper device of the type mentioned in the introduction to the description according to the invention is characterized in that said wiperblade and/or said strips comprise(s) a superelastic material such that said wiper blade has a pre-shape with a specific curvature and is deformed when placed in abutment with the windscreen to be wiped, wherein an at least substantially constant force is applied on said windscreen by outer ends of said wiper blade, independent of the curvature of said windscreen. In other words, said superelastic wiperblade and/or said superelastic strips ensure(s) that said wiper blade is deformable from an original position when it is not placed against the windscreen to be wiped (for example, when it is packaged in a package, holder or container) into a working position when it is placed against the windscreen to be wiped, and vice versa, in such a manner that
- in the original position the wiper blade exhibits a shape with a predetermined curcature, whereas
- in the working position the wiper blade has a curvature corresponding to the curvature of the windscreen to be wiped, while a constant force is applied on said windscreen by the outer ends of said wiper blade, independent of the specific curvature of said windscreen.

As a specific curvature of the windscreen to be wiped does not negatively influence the wiping qualities of the wiper blade involved, the present wiper blade can be used on almost every type of windscreen. Particularly, said wiper blade and/or said strips is/are made of a superelastic material.

Preferably, a constant force is applied on said windscreen along the entire length of said wiper blade, that is from one outer end to the other outer end of the wiper blade.

In a preferred embodiment of a windscreen wiper device in accordance with the invention the superelastic material comprises nickel and titanium. Preferably, the superelastic material further comprises at least one third element selected from the group consisting of niobium, hafnium, tantalum, tungsten and gold. In the alternative, said superelastic material may (also) comprise copper (or an alloy thereof) and/or iron (or an alloy thereof).

In another preferred embodiment of a windscreen wiper device according to the invention the stress/strain curve of the superelastic material exhibits a loading plateau, wherein an increase in strain over a range of strain varying between 0,1 and 8%, preferably between 0,1 and 5%, is accompanied by an at least substantially constant stress at the location of said loading plateau.

The invention also refers to a method for manufacturing a windscreen wiper device provided with an elastic elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, which windscreen wiper device further comprises a connecting device for an oscillating arm, wherein said oscillating arm is pivotally connected to said connecting device about a pivot axis near one end, characterized in that said wiper blade and/or said strips comprise(s) a superelastic material such that said wiper blade has a pre-shape with a specific curvature and is deformed when placed in abutment with the windscreen to be wiped, wherein an at least substantially constant force is applied on said windscreen by outer ends of said wiper blade, independent of the curvature of said windscreen.

The above and further aspects of the present invention will now be further explained in more detail with reference to figures illustrated in a drawing, wherein:
- Figure 1 is a perspective, schematic view of a preferred embodiment of a windscreen wiper device according to he invention;

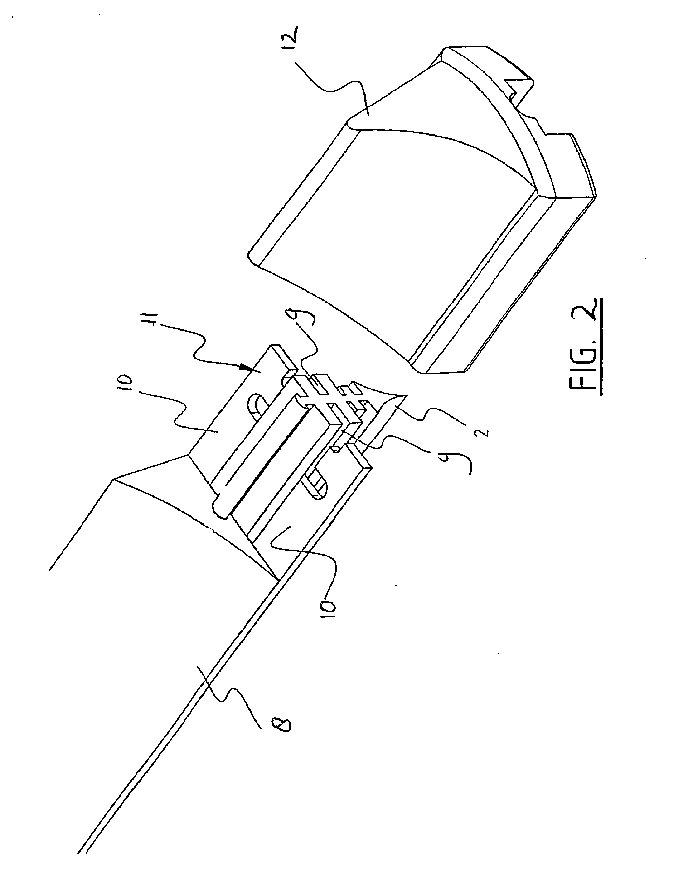

- Figure 2 is a detail of a windscreen wiper device of figure 1; and
- Figure 3 is the stress/strain curve of the superelastic material of the wiper blade used in the windscreen wiper device of figure 1.

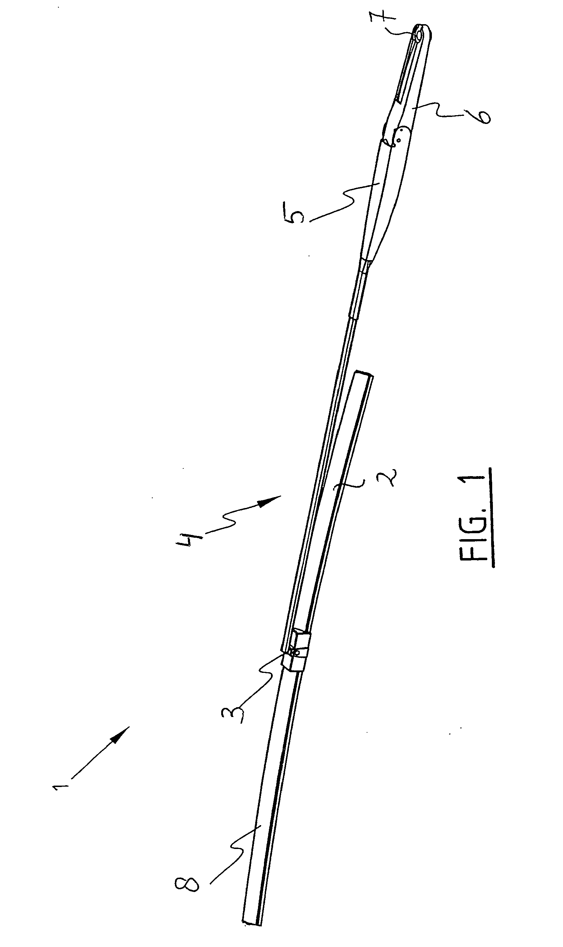

Figure 1 shows a preferred variant of a windscreen wiper device 1 according to the invention. Said windscreen wiper device is built up of a wiper blade 2, as well as of a connecting device 3 of plastic material for an oscillating arm 4. The oscillating arm 4 comprises a arm member 5 pivotally connected to a mounting head 6 fixed for rotation to a shaft 7 driven by a small motor (not shown). In use, the shaft 7 rotates alternately in a clockwise and in a counter-clockwise sense carrying the mounting head 6 into rotation also, which in turn draws the oscillating arm 4 into rotation and by means of the connecting device 3 moves the wiper blade 2. A spring (not shown) is hooked with its first end on the mounting head 6 and with its second end on the arm member 5 in order to ensure that the oscillating arm 4 and thus the wiper blade 2 connected thereto is pressed onto a windscreen to be wiped. A spoiler 8 extending along the entire length of the wiper blade 2 is detachably connected thereto.

Said windscreen wiper device is built up of said elastomeric wiper blade 2, in the longitudinal sides of which opposing longitudinal grooves 9 are formed, and of longitudinal strips 10 made of an superelastic material comprising nickel and titanium, which are fitted in said longitudinal grooves 9. Said strips 10 form a superelastic carrier element for the rubber wiper blade 2, as it were, which is thus biased in a curved position (the curvature in operative position being that of a windscreen to be wiped). Neighbouring ends 11 of strips 10 are interconnected on either side of the windscreen wiper device 1 by means of connecting pieces 12 functioning as clamping members. In this embodiment, the connecting pieces 12 are separate constructional elements, which may be form-locked ("positive locking" or "having positive fit") as well as force-locked to the ends 11 of strips 10. In another preferred variant, said connecting pieces 12 are in one piece with the strips 10. In the latter case said connecting pieces form transverse bridges for the strips 10, as it were.

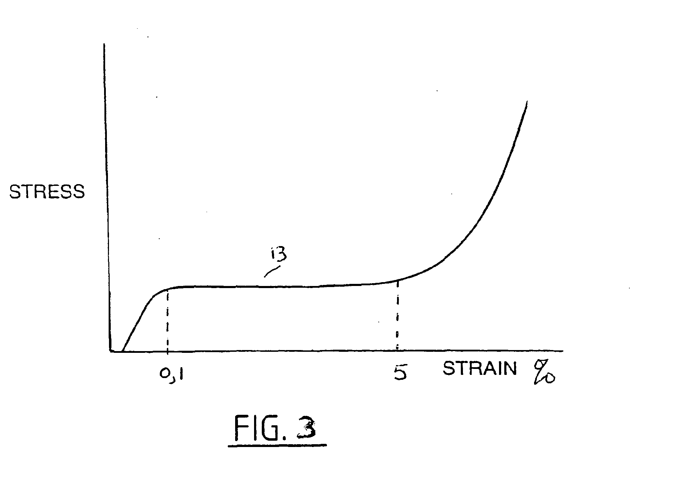

With reference to figure 3 said material has a stress/strain curve showing how stress varies with strain during deformation of the wiper blade 2. The curve exhibits a loading plateau 13. At the location of said plateau 9 an increase in strain over a range of strain varying between 0,1% and 5% corresponds with a constant stress. That means that the wiper blade 2 is able to follow any curvature of a windscreen to be wiped, while the oscillating arm 4 exerts a constant pressure measured along the entire length of the wiper blade on the windscreen to be wiped.

The scope of protection conferred by the present invention is not restricted to the embodiment shown in the figures, but also extends to other embodiments falling within the scope of the appended claims.

## Claims

1. A windscreen wiper device (1) comprising an elastic, elongated carrier element, as well as an elongated wiper blade (2) of a flexible material, which can be placed in abutment with a windscreen to be wiped, which wiper blade (2) includes opposing longitudinal grooves (9) on its longitudinal sides, in which grooves (9) spaced-apart longitudinal strips (10) of the carrier element are disposed, which windscreen wiper device (1) further comprises a connecting device (3) for an oscillating arm (4), wherein said oscillating arm (4) is pivotally connected to said connecting device (3) about a pivot axis near one end, **characterized in that** said wiper blade (2) and/or said strips (10) comprise(s) a superelastic material such that said wiper blade (2) has a pre-shape with a specific curvature and is deformed when placed in abutment with the windscreen to be wiped, wherein an at least substantially constant force is applied on said windscreen by outer ends of said wiper blade (2) independent of the curvature of said windscreen.

2. A windscreen wiper device according to claim 1, wherein the superelastic material comprises nickel and titanium or an alloy thereof.

3. A windscreen wiper device according to claim 2, wherein the superelastic material further comprises at least one third element selected from the group consisting of niobium, hafnium, tantalum, tungsten and gold.

4. A windscreen wiper device according to claim 1, 2 or 3, wherein the superelastic material comprises copper or an alloy thereof.

5. A windscreen wiper device according to any of the preceding claims 1 through 4, wherein the superelastic material comprises iron or an alloy thereof.

6. A windscreen wiper device according to any of the preceding claims 1 through 5, wherein the stress/strain curve of the superelastic material exhibits a loading plateau, and wherein an increase in strain over a range of strain varying between 0,1 and 8%, preferably between 0,1 and 5%, is accompanied by an at least substantially constant stress at the location of said loading plateau.

7. Method for manufacturing a windscreen wiper device (1) provided with an elastic, elongated carrier element, as well as an elongated wiper blade (2) of a flexible material, which can be placed in abutment with a windscreen to be wiped, which wiper blade (2) includes opposing longitudinal grooves (9) on its longitudinal sides, in which grooves (9) spaced-apart longitudinal strips (10) of the carrier element are disposed, which windscreen wiper device (1) further comprises a connecting device (3) for an oscillating arm (4), wherein said oscillating arm (4) is pivotally connected to said connecting device (3) about a pivot axis near one end, **characterized in that** said wiper blade (2) and/or said strips (10) blade comprise(s) a superelastic material such that said wiper blade (2) has a pre-shape with a specific curvature and is deformed when placed in abutment with the windscreen to be wiped, wherein an at least substantially constant force is applied on said windscreen by outer ends of said wiper blade, independent of the curvature of said windscreen.

## Patentansprüche

1. Scheibenwischer-Vorrichtung (1), die sowohl ein elastisches längliches Trägerelement als auch ein längliches Wischerblatt (2) aus einem flexiblen Material umfasst, die anliegend an eine zu wischende Windschutzscheibe angebracht werden kann, deren Wischerblatt (2) gegenüberliegende Längsrillen (9) auf dessen Längsseiten einschließt, wobei in dessen Rillen (9) mit voneinander räumlich getrennten Längsstreifen (10) des Trägerelements angeordnet sind, und wobei die Scheibenwischer-Vorrichtung (1) ferner eine Verbindungsvorrichtung (3) für einen hin- und hergehenden Arm (4) umfasst, wobei der hin- und hergehende Arm (4) drehbar um eine Schwenkachse nahe eines Endes mit der Verbindungsvorrichtung (3) verbunden ist, **dadurch gekennzeichnet, dass** das Wischerblatt (2) und/oder die Streifen (10) ein superelastisches Material von der Art umfasst (umfassen), dass das Wischerblatt (2) eine vorgegebene Form mit einer speziellen Krümmung besitzt und deformiert wird, wenn es anliegend an die zu wischende Windschutzscheibe angebracht wird, wobei eine zumindest im Wesentlichen konstante Kraft auf die Windschutzscheibe durch die äußeren Enden des Wischerblatts (2) aufgebracht wird, unabhängig von der Krümmung der Windschutzscheibe.

2. Scheibenwischer-Vorrichtung nach Anspruch 1, wobei das superelastische Material weiterhin Nickel und Titan oder eine Legierung davon umfasst.

3. Scheibenwischer-Vorrichtung nach Anspruch 2, wobei das superelastische Material zumindest ein drittes Element umfasst, das aus der Gruppe ausgewählt wird, die aus Niob, Hafnium, Tantal, Wolfram und Gold besteht.

4. Scheibenwischer-Vorrichtung nach Anspruch 1, 2 oder 3, wobei das superelastische Material Kupfer oder eine Legierung davon umfasst.

5. Scheibenwischer-Vorrichtung nach irgendeinem der vorausgehenden Ansprüche 1 bis 4, wobei das superelastische Material Eisen oder eine Legierung davon umfasst.

6. Scheibenwischer-Vorrichtung nach irgendeinem der vorausgehenden Ansprüche 1 bis 5, wobei die Spannungs-Dehnungskurve des superelastischen Materials ein Belastungsplateau aufweist und wobei eine Zunahme der Dehnung über einen Bereich der Dehnung, der zwischen 0,1 und 8%, bevorzugt zwischen 0,1 und 5% variiert begleit ist von einer zumindest im Wesentlichen konstanten Spannung an dem Ort des Belastungsplateaus.

7. Verfahren zur Herstellung einer Scheibenwischer-Vorrichtung (1), die sowohl mit einem elastischen länglichen Trägerelement als auch mit einem länglichen Wischerblatt (2) aus einem flexiblen Material versehen ist, die anliegend an eine zu wischende Windschutzscheibe angebracht werden kann, deren Wischerblatt (2) gegenüberliegende Längsrillen (9) auf dessen Längsseiten einschließt, wobei in dessen Rillen (9) mit voneinander räumlich getrennten Längsstreifen (10) des Trägerelements angeordnet sind, und wobei die Scheibenwischer-Vorrichtung (1) ferner eine Verbindungsvorrichtung (3) für einen hin- und hergehenden Arm (4) umfasst, wobei der hin- und hergehende Arm (4) drehbar um eine Schwenkachse nahe eines Endes mit der Verbindungsvorrichtung (3) verbunden ist, **dadurch gekennzeichnet, dass** das Wischerblatt (2) und/oder die Streifen (10) ein superelastisches Material von der Art umfasst (umfassen), dass das Wischerblatt (2) eine vorgegebene Form mit einer speziellen Krümmung besitzt und deformiert wird, wenn es anliegend an die zu wischende Windschutzscheibe angebracht wird, wobei eine zumindest im Wesentlichen konstante Kraft auf die Windschutzscheibe durch die äußeren Enden des Wischerblatts aufgebracht wird, unabhängig von der Krümmung der Windschutzscheibe.

## Revendications

1. Dispositif d'essuie-glace (1) comprenant un élément support élastique de forme allongée, de même qu'un balai (2) de forme allongée en matériau flexible, qui peut être placé en butée contre un pare-brise à essuyer, lequel balai (2) comporte, sur ses faces longitudinales, des rainures longitudinales opposées (9), dans lesquelles sont disposées des bandes longitudinales (10) de l'élément support mutuellement distantes, lequel dispositif d'essuie-glace (1) comprend, en outre, un dispositif de raccordement (3) d'un bras oscillant (4), ledit bras oscillant (4) étant relié à pivotement audit dispositif de raccordement (3) autour d'un axe de pivotement situé à proximité d'une extrémité, **caractérisé en ce que** ledit balai (2) et/ou lesdites bandes (10) comprennent un matériau superélastique tel que le balai (2) présente une pré-forme dotée d'une courbure spécifique et est déformé lorsqu'il est placé en butée contre le pare-brise à essuyer, une force au moins sensiblement constante étant appliquée sur ledit pare-brise par des extrémités extérieures dudit balai (2), indépendamment de la courbure dudit pare-brise.

2. Dispositif d'essuie-glace selon la revendication 1, dans lequel le matériau superélastique contient du nickel et du titane ou un alliage de ceux-ci.

3. Dispositif d'essuie-glace selon la revendication 2, dans lequel le matériau superélastique contient, en outre, au moins un troisième élément sélectionné dans le groupe constitué de niobium, hafnium, tantale, tungstène et or.

4. Dispositif d'essuie-glace selon la revendication 1, 2 ou 3, dans lequel le matériau superélastique contient du cuivre ou un alliage de cuivre.

5. Dispositif d'essuie-glace selon l'une quelconque des revendications précédentes 1 à 4, dans lequel le matériau superélastique contient du fer ou un alliage de fer.

6. Dispositif d'essuie-glace selon l'une quelconque des revendications précédentes 1 à 5, dans lequel la courbe contrainte/déformation du matériau superélastique révèle un plateau de chargement et dans lequel une augmentation de la déformation sur une plage de déformation variant entre 0,1 et 8%, de préférence entre 0,1 et 5%, est accompagnée d'une contrainte au moins sensiblement constante à l'endroit dudit plateau de chargement.

7. Procédé de fabrication d'un dispositif d'essuie-glace (1) comprenant un élément support élastique de forme allongée, ainsi qu'un balai (2) de forme allongée en matériau flexible, qui peut être placé en butée contre un pare-brise à essuyer, lequel balai (2) comporte, sur ses faces longitudinales, des rainures longitudinales (9) opposées dans lesquelles sont disposées des bandes longitudinales (10) de l'élément support mutuellement distantes, lequel dispositif d'essuie-glace (1) comprend, en outre, un dispositif de raccordement (3) d'un bras oscillant (4), ledit bras oscillant (4) étant relié à pivotement audit dispositif de raccordement (3) autour d'un axe de pivotement situé à proximité d'une extrémité, **caractérisé en ce que** ledit balai (2) et/ou lesdites bandes (10) comprennent un matériau superélastique tel que ledit balai (2) présente une pré-forme dotée d'une courbure spécifique et est déformé lorsqu'il est placé en butée contre le pare-brise à essuyer, une force au moins sensiblement constante étant appliquée sur ledit pare-brise par des extrémités extérieures dudit balai, indépendamment de la courbure dudit pare-brise.
